(19) Europäisches Patentamt
European Patent Office
Office européen des brevets

(11) **EP 1 885 012 A1**

(12) **EUROPEAN PATENT APPLICATION**
published in accordance with Art. 153(4) EPC

(43) Date of publication:
**06.02.2008 Bulletin 2008/06**

(51) Int Cl.:
**H01M 8/02** (2006.01)   **H01M 8/10** (2006.01)

(21) Application number: **06746911.4**

(22) Date of filing: **26.05.2006**

(86) International application number:
**PCT/JP2006/310582**

(87) International publication number:
**WO 2006/126685 (30.11.2006 Gazette 2006/48)**

(84) Designated Contracting States:
**DE FR GB**

(30) Priority: **27.05.2005 JP 2005155724**

(71) Applicant: **KABUSHIKI KAISHA TOSHIBA**
**Tokyo 105-8001 (JP)**

(72) Inventors:
• **HIGASHI, Shinya, Toshiba Corporation**
**Tokyo 105-8001 (JP)**

• **NAKAGAWA, Yasutada, Toshiba Corporation**
**Tokyo 105-8001 (JP)**
• **TERADA, Takahiro, Toshiba Corporation**
**Tokyo 105-8001 (JP)**
• **YOSHIDA, Yuuichi, Toshiba Corporation**
**Tokyo 105-8001 (JP)**

(74) Representative: **HOFFMANN EITLE**
**Patent- und Rechtsanwälte**
**Arabellastrasse 4**
**81925 München (DE)**

(54) **FUEL CELL**

(57)   A fuel cell according to the invention includes: a fuel supply section including a diffusion section configured to diffuse fuel supplied from a fuel supply port in an in-plane direction and an aperture plate having a plurality of apertures configured to emit the fuel from the diffusion section; an oxygen introducing section configured to introduce oxygen from outside; and a power generating section configured to generate electric power by the fuel supplied from the fuel supply section and oxygen supplied from the oxygen introducing section. Aperture ratio of the plurality of apertures provided in the aperture plate has a substantially radial distribution in the in-plane direction such that the aperture ratio is small near the fuel supply port and increases with distance from the fuel supply port. This enables provision of a fuel cell of the spontaneous respiration type where fuel can be uniformly supplied to achieve efficient power generation.

FIG. 2

## Description

Technical Field

This invention relates to a fuel cell, and more particularly to a fuel cell including a power generating section fueled through the apertures of a current collector.

Background Art

Fuel cells fueled by methanol and the like are coming into practical use as power supply for small electronic devices such as notebook personal computers, compact audio players, and wireless headsets. The methanol fuel cell (DMFC: direct methanol fuel cell) is a fuel cell of the spontaneous respiration type, where methanol serving as fuel is spontaneously transported to the fuel electrode by capillarity and diffusion phenomenon. Then the activated hydrogen element (hereinafter proton) and electron generated at the fuel electrode electrochemically react with oxygen gas taken in from the air side through an electrolyte membrane, generating electric power (e.g., Patent Document 1).

There is disclosed another fuel cell using a current collector formed from carbon cloth inwoven with carbon fibers. The carbon cloth has a mesh gradually coarsened in the direction from the inlet to the outlet of a fuel gas channel groove in contact with the surface of the current collector (Patent Document 2).

However, in the case of the fuel cell of the spontaneous respiration type, fuel is not forced to flow, but spontaneously transported from a fuel supply port with a prescribed size. Hence the amount of fuel supplied is large near the fuel supply port and decreases with the distance from the fuel supply port, creating an uneven distribution in the amount supplied. Such an uneven distribution in the amount supplied causes variation in power generation. Thus it is necessary to stably supply methanol fuel to the fuel electrode.

Patent Document 1: JP-A 2000-106201(Kokai)
Patent Document 2: JP-A 8-124583A (1996)(Kokai)

Disclosure of Invention

Problems to be Solved by the Invention

An object of the invention is to provide a fuel cell of the spontaneous respiration type where fuel can be uniformly supplied to achieve efficient power generation.

Solution to the Problems

According to an aspect of the invention, there is provided a fuel cell including: a fuel supply section including a diffusion section configured to diffuse fuel supplied from a fuel supply port in an in-plane direction and an aperture plate having a plurality of apertures configured to emit the fuel from the diffusion section; an oxygen introducing section configured to introduce oxygen from outside; and a power generating section configured to generating electric power by the fuel supplied from the fuel supply section and oxygen supplied from the oxygen introducing section, aperture ratio of the plurality of apertures provided in the aperture plate having a substantially radial distribution in the in-plane direction such that the aperture ratio is small near the fuel supply port and increases with distance from the fuel supply port.

Brief Description of Drawings

FIG. 1 is a conceptual cross-sectional view showing the basic configuration of a fuel cell according to an embodiment of the invention.
FIG. 2 is a conceptual plan view for illustrating the distribution of aperture ratio in the aperture plate 40 in the case where the fuel supply port 10 is provided at the center of the lower face of the fuel supply section 2.
FIG. 3 is a conceptual plan view for illustrating the distribution of aperture ratio in the case where the fuel supply port 10 is provided in the side face of the fuel supply section 2.
FIG. 4 is a schematic cross-sectional view illustrating a specific structure of the fuel cell according to the embodiment of the invention.
FIG. 5 is a schematic cross-sectional view illustrating a specific structure of the fuel cell according to the embodiment of the invention.

FIG. 6 is a conceptual view for illustrating the distribution of aperture ratio of the fuel electrode side current collector 40 in the case where the fuel supply port 10 is provided nearly at the center of the lower face of the casing 140.

FIG. 7 is a schematic view illustrating the aperture distribution of the fuel electrode side current collector 40 of the fuel cell of a comparative example.

FIG. 8 is a graph illustrating the fuel concentration distribution in the liquid retention sheet 20.

FIG. 9 is a graph illustrating the concentration distribution of fuel supplied to the power generating section 4 with the aperture ratio of the fuel electrode side current collector 40 varied.

FIG. 10 is a schematic view showing a specific example of the aperture ratio distribution described above with reference to FIG. 6.

FIG. 11 is a schematic view showing a specific example of the aperture ratio distribution described above with reference to FIG. 6.

FIG. 12 is a schematic view showing a specific example of the aperture ratio distribution described above with reference to FIG. 6.

FIG. 13 is a conceptual view showing the distribution of aperture ratio of the fuel electrode side current collector 40 in the case where the fuel supply port 10 is provided in the side face of the casing 140.

FIG. 14 is a schematic view showing a specific example of the aperture ratio distribution shown in FIG. 13.

FIG. 15 is a conceptual view showing the distribution of aperture ratio of the fuel electrode side current collector 40 in the case where the fuel supply port 10 is provided at a corner of the side face of the casing 140.

FIG. 16 is a schematic view showing a specific example of the aperture ratio distribution shown in FIG. 15.

FIG. 17 is a conceptual view showing the distribution of aperture ratio of the fuel electrode side current collector 40 in the case where a plurality of fuel supply ports 10 are provided in the lower face of the casing 140.

FIG. 18 is a schematic view showing a specific example of the aperture ratio distribution shown in FIG. 17.

FIG. 19 is a conceptual view showing the distribution of aperture ratio of the fuel electrode side current collector 40 in the case where a plurality of fuel supply ports 10 are provided in the side face of the casing 140.

FIG. 20 is a schematic view showing a specific example of the aperture ratio distribution shown in FIG. 19.

Description of Reference Numerals

| 2 | fuel supply section |
| 4 | power generating section |
| 6 | oxygen introducing section |
| 10 | fuel supply port |
| 20 | diffusion section |
| 30 | porous membrane |
| 40 | fuel electrode side current collector (aperture plate) |
| 40H | aperture |
| 50 | fuel side gas diffusion layer |
| 60 | fuel electrode |
| 70 | electrolyte plate |
| 80 | oxidizer electrode |
| 90 | oxidizer side gas diffusion layer |
| 100 | oxidizer side current collector |
| 110 | moisture retention sheet |
| 140 | casing |

Best Mode for Carrying Out the Invention

An embodiment of the invention will now be described with reference to the drawings.

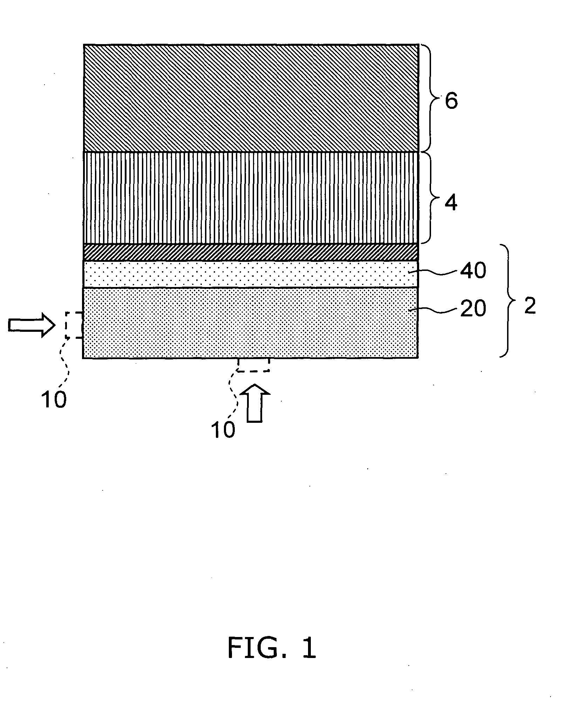

FIG. 1 is a conceptual cross-sectional view showing the basic configuration of a fuel cell according to the embodiment of the invention.

More specifically, the fuel cell of this embodiment has a structure where a fuel supply section 2, a power generating section 4, and an oxygen introducing section 6 are laminated in this order.

The fuel supply section 2 supplies methanol or other fuel to the power generating section 4, and a fuel supply port 10 is provided in the lower face or side face of the fuel supply section 2. A tank or the like filled with methanol or other liquid fuel is connected to the fuel supply port 10, and the liquid fuel is supplied to the fuel supply section 2 through the fuel supply port 10. It is noted that the fuel is not limited to liquid, but solid fuel can be also used by sublimation, for example.

On the other hand, the oxygen introducing section 6 takes in oxygen from outside and supplies it to the power generating section 4.

The power generating section 4 generates electric power by electrochemical reaction between the fuel and oxygen. The specific structure of these elements will be described later in detail.

In this embodiment, the fuel supply section 2 is provided with a diffusion section 20 and an aperture plate 40. The diffusion section 20 serves to diffuse the liquid fuel supplied from the fuel supply port 10 in the in-plane direction by capillarity and the like. The aperture plate 40 has a plurality of apertures (not shown) with their aperture ratio varied substantially radially around the fuel supply port 10. The liquid fuel diffused in the diffusion section 20 is supplied to the power generating section 4 through these apertures. That is, the aperture ratio of the plurality of apertures provided in the aperture plate 40 has a substantially radial distribution which, in the in-plane direction, is small near the fuel supply port 10 and increases with the distance from the fuel supply port 10. It is noted that the "aperture ratio" used herein refers to the proportion of the area of apertures per area.

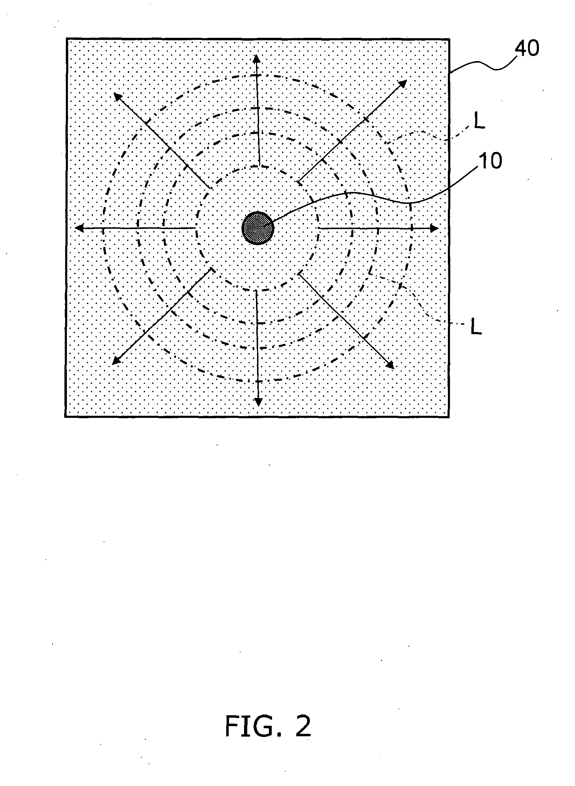

FIG. 2 is a conceptual plan view for illustrating the distribution of aperture ratio in the aperture plate 40 in the case where the fuel supply port 10 is provided at the center of the lower face of the fuel supply section 2.

The aperture plate 40 has a plurality of apertures, not shown. Specific examples of the apertures will be described later in detail. In this embodiment, the aperture ratio of the apertures, not shown, has a distribution expanding substantially radially around the fuel supply port 10.

For example, assuming equidistant lines L (shown by dot-dashed lines) on each of which the distance from the fuel supply port 10 is constant, the aperture ratio is fixed on each of these equidistant lines L. As shown by arrows in FIG. 2, the aperture ratio is increased with the distance from the fuel supply port 10. Then the supply rate of fuel supplied from the fuel supply port 10 with respect to the power generating section 4 can be made uniform in the plane. Consequently, in-plane variation in the amount of power generation can be reduced, achieving low-loss and stable power generation.

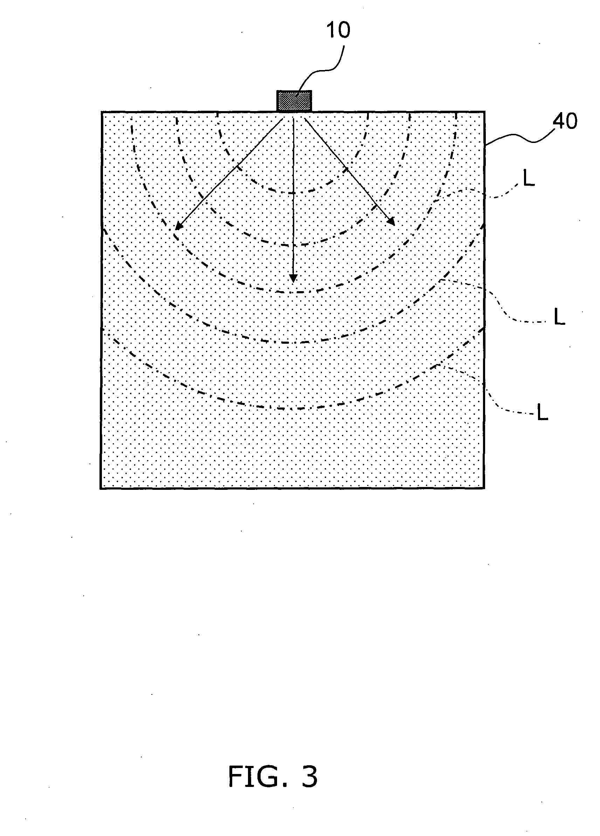

FIG. 3 is a conceptual plan view for illustrating the distribution of aperture ratio in the case where the fuel supply port 10 is provided in the side face of the fuel supply section 2.

More specifically, also in this case, the aperture ratio of the aperture plate 40 is provided with a substantially radial distribution around the fuel supply port 10. In other words, the aperture ratio is fixed on the equidistant line L (dot-dashed line) where the distance from the fuel supply port 10 is constant, and the aperture ratio is increased with the distance from the fuel supply port 10 as shown by arrows. Then the supply rate of fuel supplied from the fuel supply port 10 with respect to the power generating section 4 can be made uniform in the plane. Consequently, in-plane variation in the amount of power generation can be reduced, achieving low-loss and stable power generation.

In the following, the embodiment of the invention is described in more detail with reference to a specific structure of the fuel cell.

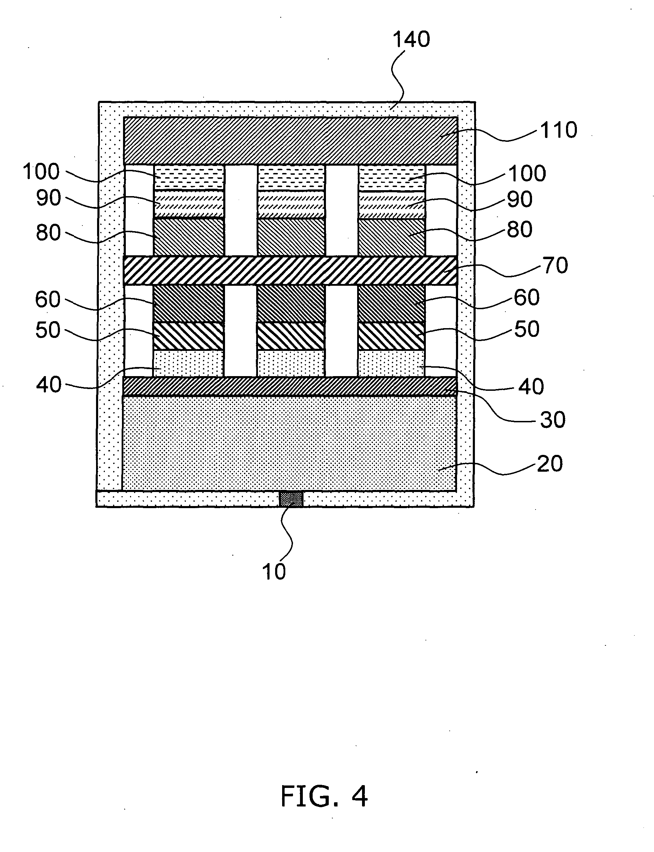

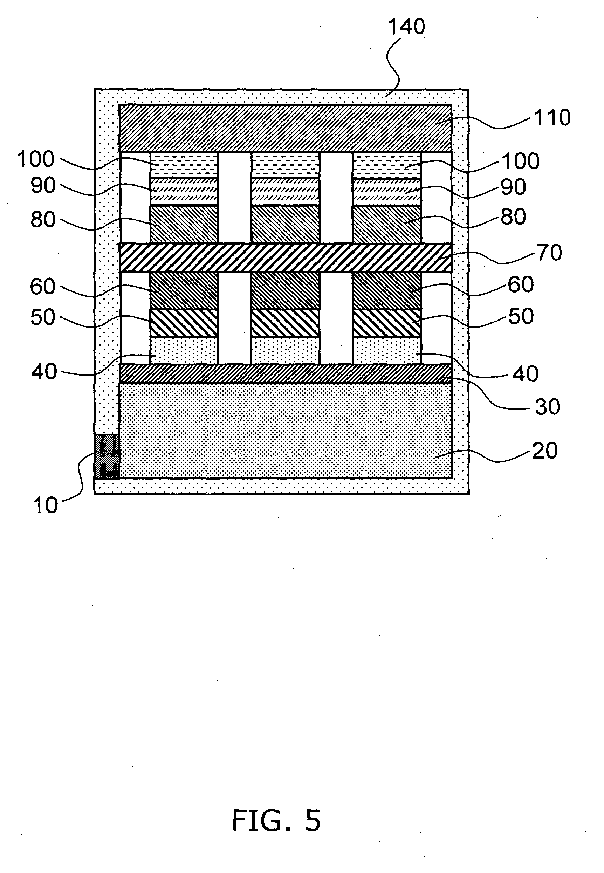

FIGS. 4 and 5 are schematic cross-sectional views illustrating the specific structure of the fuel cell according to the embodiment of the invention.

More specifically, the fuel cell of this example has a structure where a liquid retention sheet 20, a porous membrane 30, a fuel electrode side current collector 40, a fuel side gas diffusion layer 50, a fuel electrode 60, an electrolyte plate 70, an oxidizer electrode 80, an oxidizer side gas diffusion layer 90, an oxidizer side current collector 100, and a moisture retention sheet 110 are laminated in this order. These elements are protected by a casing 140. As illustrated in FIG. 4, a fuel supply port 10 is provided in the lower face of the casing 140. Alternatively, as illustrated in FIG. 5, a fuel supply port 10 is provided in the side face of the casing 140. A tank or the like filled with methanol or other liquid fuel is connected to the fuel supply port 10, and the liquid fuel is supplied to the liquid retention sheet 20 through the fuel supply port 10.

Next, the power generation mechanism in the fuel cell of this example is described.

First, on the fuel electrode 60 side, protons ($H^+$) and electrons ($e^-$) are generated by a half reaction expressed by the following formula (1), which is based on electrochemical reaction between methanol and water:

$$CH_3H(1)+ H_2O(1) \rightarrow CO_2(g) \uparrow + 6H^+ + 6e^- \qquad (1)$$

Here methanol spontaneously migrates in the liquid retention sheet 20 under the driving force of capillarity, passes through the apertures (not shown) provided in the fuel electrode side current collector 40, travels through the fuel side gas diffusion layer 50, and is supplied to the fuel electrode 60.

Correspondingly, on the oxidizer electrode 80 side, oxygen is taken from the moisture retention sheet 110 into the fuel cell system, and oxygen ($O_2$) gas in the atmosphere electrochemically reacts with $H^+$ and e- from the fuel side by a half reaction expressed by the following formula (2), thereby generating electric power:

$$\frac{3}{2}O_2 + 6H^+ + 6e^- \rightarrow 3H_2O \qquad (2)$$

The water ($H_2O$) generated by this electrochemical reaction penetrates through the electrolyte plate 70 to the fuel electrode 60, and can be reused as fuel in the half reaction of (1) based on electrochemical reaction.

Here, specific example materials for major components constituting this fuel cell are listed below.

The fuel supply port 10 can be formed from thermoplastic polyester. The liquid retention sheet 20 can be formed from nylon fibers. The porous membrane 30 can be formed from a silicone rubber sheet having a thickness of 200 micrometers. The fuel electrode 60 can be formed from an elemental metal in the platinum group (e.g., Pt, Ru, Rh, Ir, Oa, Pd, etc.) or an alloy containing a platinum-group element, and is preferably made of a Pt-Ru alloy, being highly resistant to methanol and carbon monoxide, but is not limited thereto. The material of the fuel electrode 60 can also be a supported catalyst based on a conductive support such as a carbon material.

The electrolyte plate 70 can be illustratively made of a fluorine-based resin having a sulfonic acid group, a hydrocarbon-based resin having a sulfonic acid group, or an inorganic material such as tungstic acid or phosphotungstic acid, but is not limited thereto. On the other hand, the oxidizer electrode 80 can be made of an elemental metal in the platinum group (e.g., Pt, Ru, Rh, Ir, Os, Pd, etc.) or an alloy containing a platinum-group element, and can also be made of a supported catalyst based on a conductive support such as a carbon material.

The moisture retention sheet 110 can be illustratively made of a polyethylene porous film having a thickness of 500 micrometers. In this case, the air permeability of the film can illustratively be approximately 2 sec/100 $cm^3$, and its moisture permeability can be approximately 4000 $g/m^2 \cdot 24h$.

This fuel cell can be shaped like a plate with the outer dimensions being approximately 3 cm long $\times$ 2 cm wide $\times$ 5 mm thick.

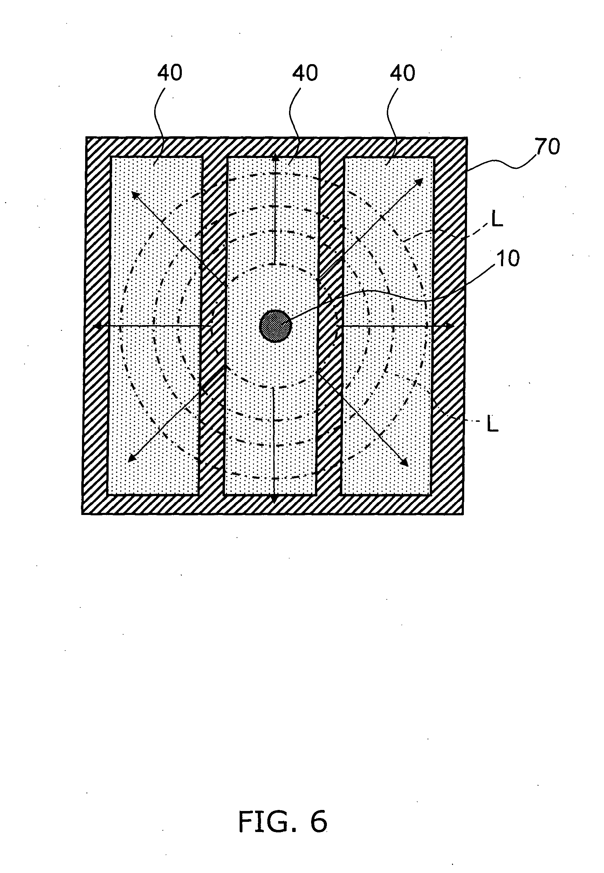

FIG. 6 is a conceptual view for illustrating the distribution of aperture ratio of the fuel electrode side current collector 40 in the case where the fuel supply port 10 is provided nearly at the center of the lower face of the casing 140.

More specifically, this figure is a schematic view of the current collector 40 of the fuel cell shown in FIG. 4 as viewed from the fuel supply port 10 side. In this example, the casing 140 contains three cell sections C. Each cell section C has a laminated structure from the fuel electrode side current collector 40 to the oxidizer side current collector 100.

The fuel electrode side current collector 40 included in the cell section C has a plurality of apertures, not shown, and the aperture ratio of these apertures has a substantially radial distribution around the fuel supply port 10. That is, the aperture ratio increases with the distance from the fuel supply port 10.

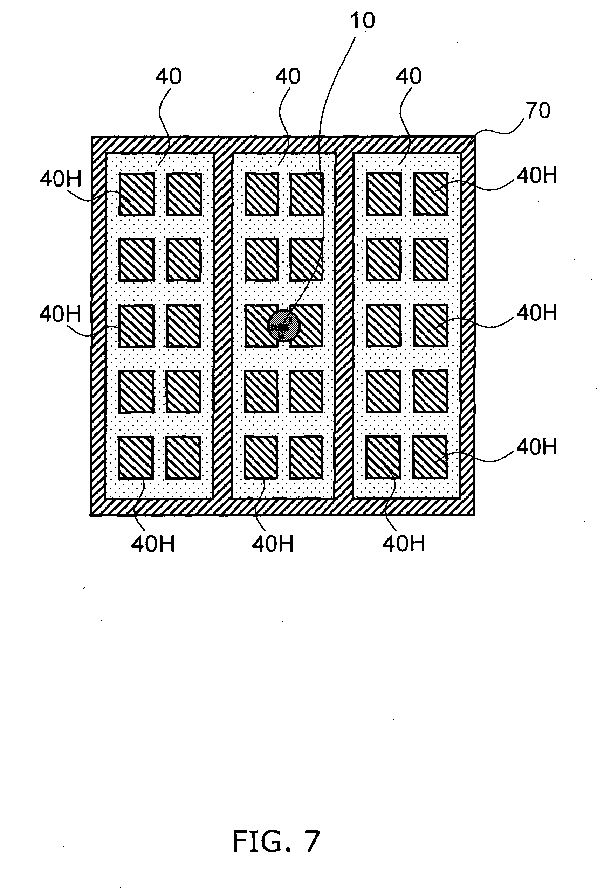

FIG. 7 is a schematic view illustrating the aperture distribution of the fuel electrode side current collector 40 of the fuel cell of a comparative example.

More specifically, this figure is a schematic view of the current collector 40 of the fuel cell shown in FIG. 4 as viewed from the fuel supply port 10 side. In this comparative example, the fuel electrode side current collector 40 of each cell C has a plurality of apertures 40H, and the aperture ratio of these apertures 40H is uniform. That is, the aperture ratio of the apertures 40H is identical whether they are close to or far from the fuel supply port 10. However, such uniform aperture ratio in the fuel electrode side current collector 40 causes variation in the amount of power generation. The reason for this is described in the following.

In the case of a fuel cell of the spontaneous respiration type, fuel supplied from the fuel supply port 10 spreads two-dimensionally inside the liquid retention sheet 20 by capillarity and diffusion phenomenon.

In this case, liquid fuel distributed in the liquid retention sheet 20 has a radial distribution in concentration C defined by formula (3):

$$\frac{\partial C}{\partial t} = D\left(\frac{\partial^2 C}{\partial x^2} + \frac{\partial^2 C}{\partial y^2}\right) - \alpha(C) \qquad (3)$$

where t is time, C is the fuel concentration, D is the diffusion coefficient of the liquid fuel in the liquid retention sheet 20, and a(C) is the rate of evaporation of the fuel from the liquid retention sheet 20.

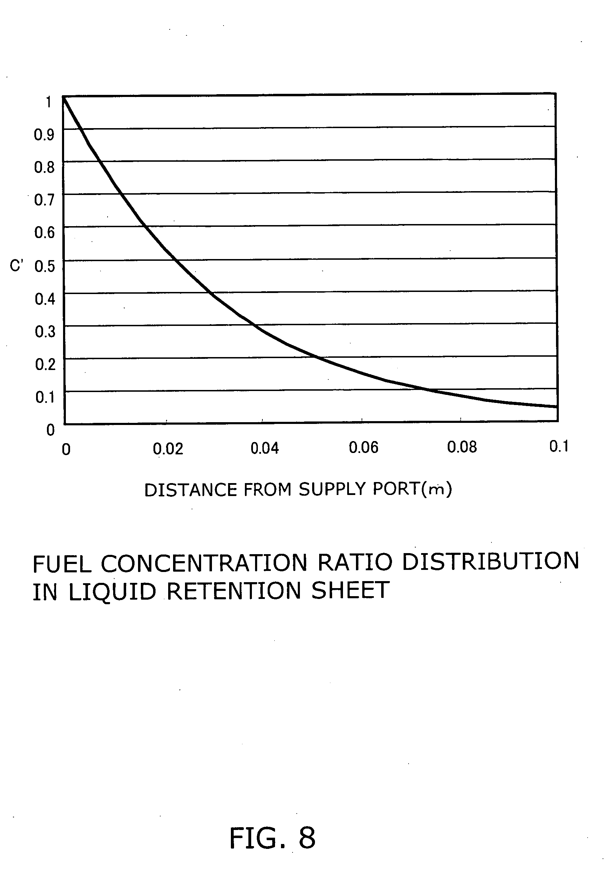

FIG. 8 is a graph illustrating the fuel concentration distribution in the liquid retention sheet 20.

More specifically, this figure shows the fuel distribution in the liquid retention sheet 20 measuring 100 mm long and 15 mm wide, where the fuel concentration at the fuel supply port 10 is set to 1. It turns out that the fuel concentration ratio decreases to approximately 53 percent at a point of 0.02 m spaced longitudinally from the fuel supply port 10, and decreases to approximately 8 percent at a point of 0.08 m.

Thus, if an uneven concentration distribution occurs in the liquid fuel in the plane of the liquid retention sheet 20, variation occurs in the amount of fuel supplied to the fuel electrode 60 through the fuel electrode side current collector 40 having uniform aperture ratio as illustrated in FIG. 7. This results in variation in electrical characteristics between the cells C, and the distribution of electrical characteristics in each cell C is also made nonuniform.

More specifically, if more fuel than the appropriate amount is supplied to the power generating section, excess fuel not consumed at the fuel electrode 60 migrates through the electrolyte plate 70 to the oxidizer electrode 80 side. If such a phenomenon occurs, the fuel not used for power generation is wasteful. Furthermore, fuel and oxygen undergo combustion reaction, decreasing oxygen required for electrochemical reaction at the oxidizer electrode 80. Moreover, the catalyst surface area of the oxidizer electrode 80 is decreased, causing voltage loss.

Conversely, if the amount of fuel is excessively small, the energy for causing reaction increases, and the voltage loss (activation polarization) associated therewith increases.

Hence, for improving the electrical characteristics of the fuel cell, it is important to supply an appropriate amount of fuel to each cell C without causing variation in fuel concentration in the liquid retention sheet 20. However, if long-term operation is required in a portable electronic device, for example, the liquid retention sheet 20 needs to be upsized with the upsizing of the fuel cell. Hence the fuel concentration gradient in the liquid retention sheet 20 becomes prominent. Thus excess or deficiency of fuel supply is likely to occur in each cell C, and the decrease of electrical characteristics is likely to occur.

In contrast, in this embodiment, as described with reference to FIG. 6, the aperture ratio of the fuel electrode side current collector 40 is varied radially around the fuel supply port 10. Consequently, the amount of fuel penetrated by evaporation can be made uniform, and variation in the amount of power generation can be prevented.

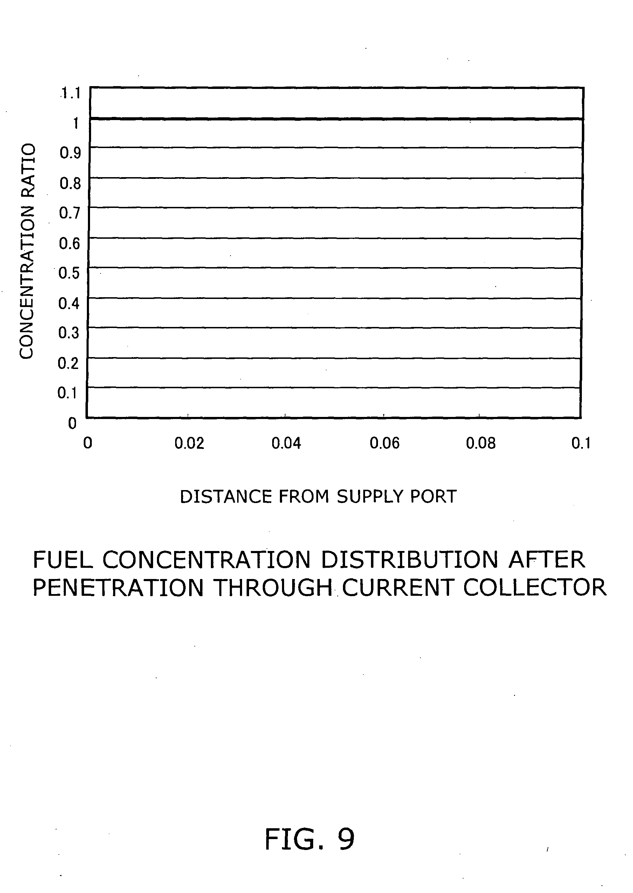

FIG. 9 is a graph illustrating the concentration distribution of fuel supplied to the power generating section 4 with the aperture ratio of the fuel electrode side current collector 40 varied. The fuel concentration ratio on the vertical axis is normalized by the fuel concentration in the nearest neighborhood of the fuel supply port 10.

Here, in accordance with the fuel concentration distribution illustrated in FIG. 8, the aperture ratio of the fuel electrode side current collector 40 is varied so as to be approximately 14 percent at a point of 0.02 m and approximately 90 percent at a point of 0.08 m. Furthermore, the correction term $\gamma$ described later is set to zero. Thus, by varying the aperture ratio of the fuel electrode side current collector 40 radially from the fuel supply port 10, fuel can be uniformly supplied to the power generating section.

More generally, the aperture ratio can be adjusted as follows.

The aperture ratio distribution is formed so that the aperture ratio vanishes in close proximity of the fuel supply port 10 and gradually increases with the distance from the fuel supply port 10.

The aperture ratio in this aperture ratio distribution can be calculated by the following formula (4):

$$\text{Aperture ratio} = \beta/C'_{(x,y)} + \gamma \qquad (4)$$

where $\beta$ is a constant, and $C'_{(x,y)}$ is the in-plane fuel concentration ratio. $C'_{(x,y)}$ is the value of the fuel concentration $C_{(x,y)}$ in the plane of the liquid retention sheet 20 normalized by the fuel concentration $C_1$ at the fuel supply port 10. $\gamma$ is a correction term. The correction term $\gamma$ allows for the phenomenon where excess liquid fuel fails to penetrate through the apertures of the fuel electrode side current collector 40 in the high fuel concentration region due to the restriction of aperture ratio and flows (diffuses) in the liquid retention sheet 20 or the porous membrane 30 in the in-plane direction.

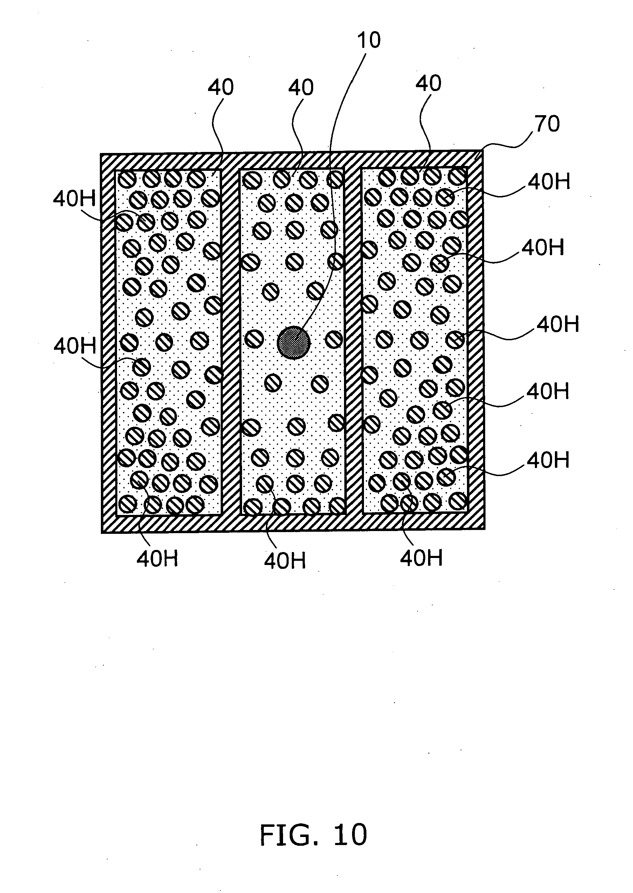

FIGS. 10 to 12 are schematic views showing specific examples of the aperture ratio distribution described above with reference to FIG. 6. More specifically, in the example shown in FIG. 10, the fuel electrode side current collector 40 is provided with many relatively small apertures 40H. The apertures 40H have the same size, and the density thereof is varied. That is, the density of apertures 40H is low near the fuel supply port 10 and is increased with the distance from the fuel supply port 10. Thus the in-plane distribution of the amount of fuel supplied to the power generating section through the apertures 40H can be made close to uniformity.

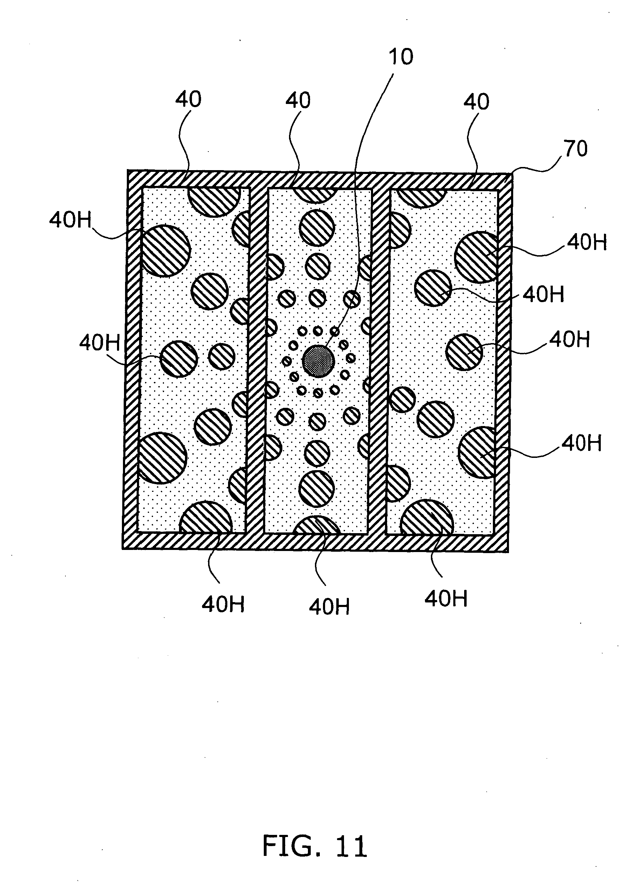

Next, in the example shown in FIG. 11, the size of the apertures 40H is varied. That is, the size of the aperture 40H is small near the fuel supply port 10 and is increased with the distance from the fuel supply port 10. Also in this case, the in-plane distribution of the amount of fuel supplied to the power generating section can be made close to uniformity.

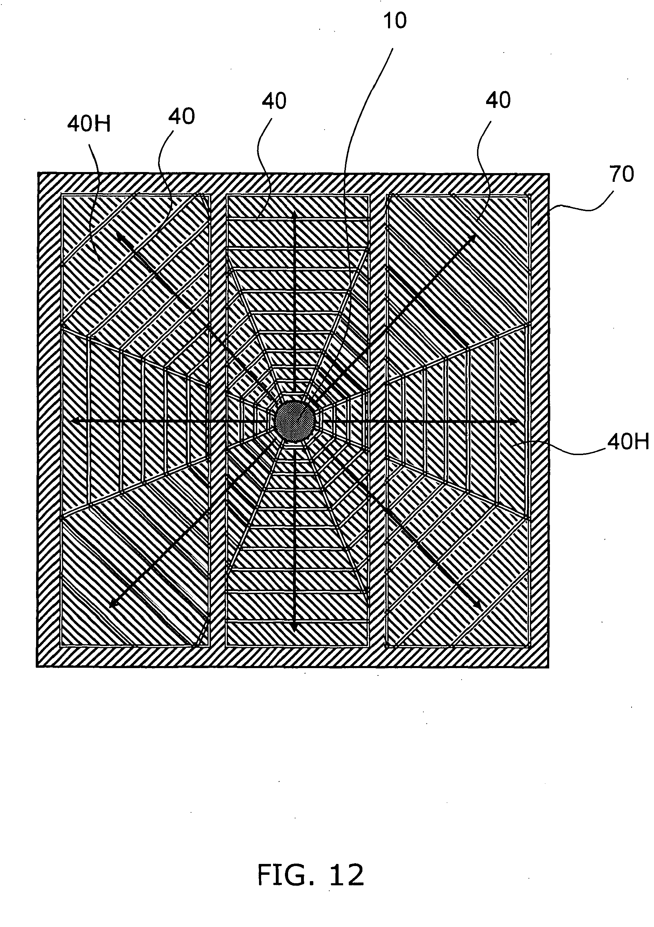

In the example shown in FIG. 12, the fuel electrode side current collector 40 is formed as a mesh like a cobweb around the fuel supply port 10. The density of the mesh is decreased with the distance from the fuel supply port 10. That is, the mesh is formed so that its aperture ratio is increased with the distance from the fuel supply port 10. Also in this case, the in-plane distribution of the amount of fuel supplied to the power generating section can be made close to uniformity.

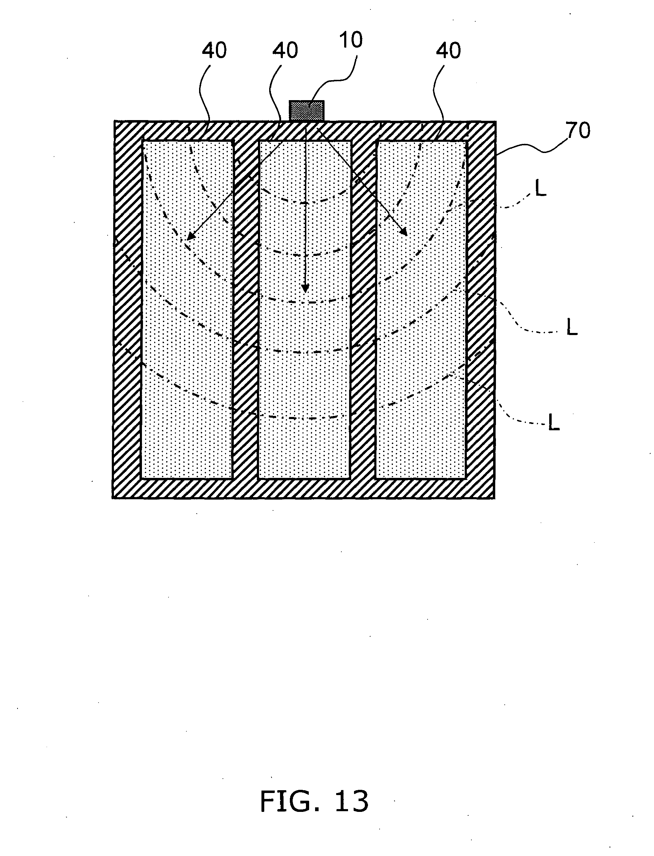

FIG. 13 is a conceptual view showing the distribution of aperture ratio of the fuel electrode side current collector 40 in the case where the fuel supply port 10 is provided in the side face of the casing 140.

Also in this case, the aperture ratio of the apertures, not shown, has a distribution expanding substantially radially around the fuel supply port 10 as shown by dot-dashed equidistant lines L.

For example, assuming equidistant lines L on each of which the distance from the fuel supply port 10 is constant, the aperture ratio is fixed on each of these equidistant lines L. The aperture ratio is increased with the distance from the fuel supply port 10.

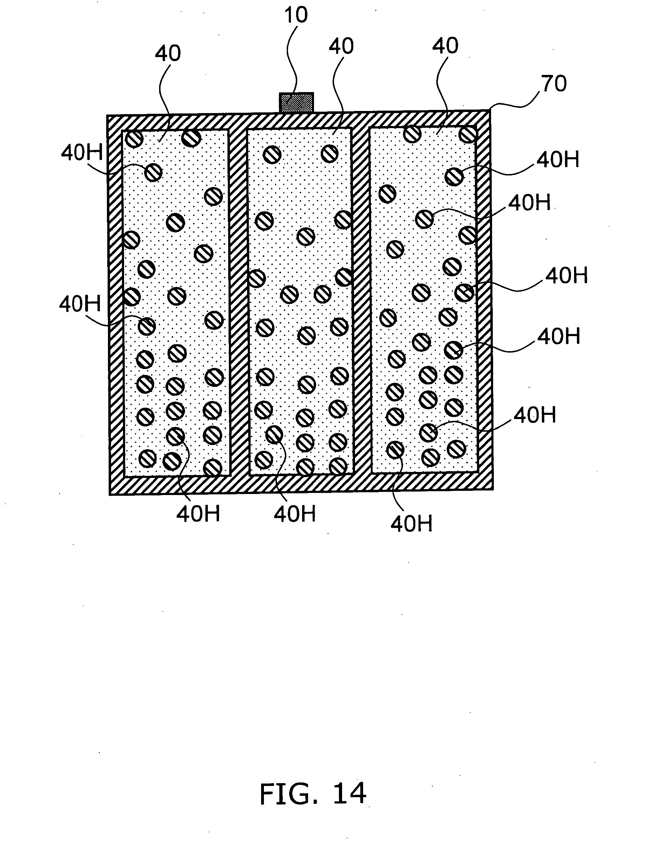

FIG. 14 is a schematic view showing a specific example of the aperture ratio distribution shown in FIG. 13.

In this example, the fuel electrode side current collector 40 is provided with many relatively small apertures 40H. The apertures 40H have the same size, and the density thereof is varied. That is, the density of apertures 40H is low near the fuel supply port 10 and is increased with the distance from the fuel supply port 10. Thus the in-plane distribution of the amount of fuel supplied to the power generating section through the apertures 40H can be made close to uniformity.

Instead of varying the density of apertures 40H in this manner, the size of the apertures 40H may be varied as described above with reference to FIG. 11, or the apertures 40H may be formed as a mesh with its density or aperture ratio varied as described above with reference to FIG. 12.

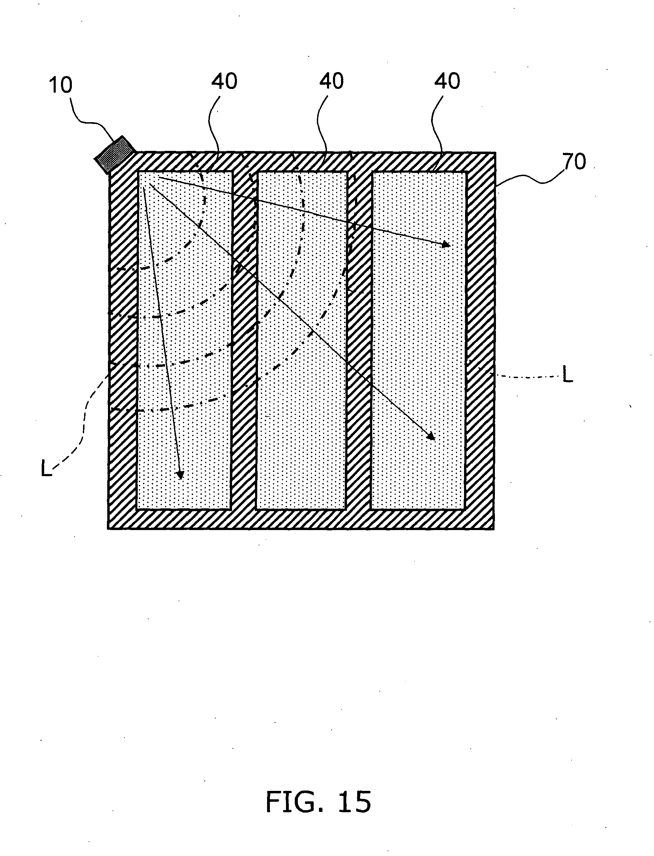

FIG. 15 is a conceptual view showing the distribution of aperture ratio of the fuel electrode side current collector 40 in the case where the fuel supply port 10 is provided at a corner of the side face of the casing 140.

More specifically, the aperture ratio of the apertures, not shown, has a distribution expanding substantially radially around the fuel supply port 10. Also in this case, assuming equidistant lines L on each of which the distance from the fuel supply port 10 is constant, the aperture ratio is fixed on each of these equidistant lines L. The aperture ratio is increased with the distance from the fuel supply port 10.

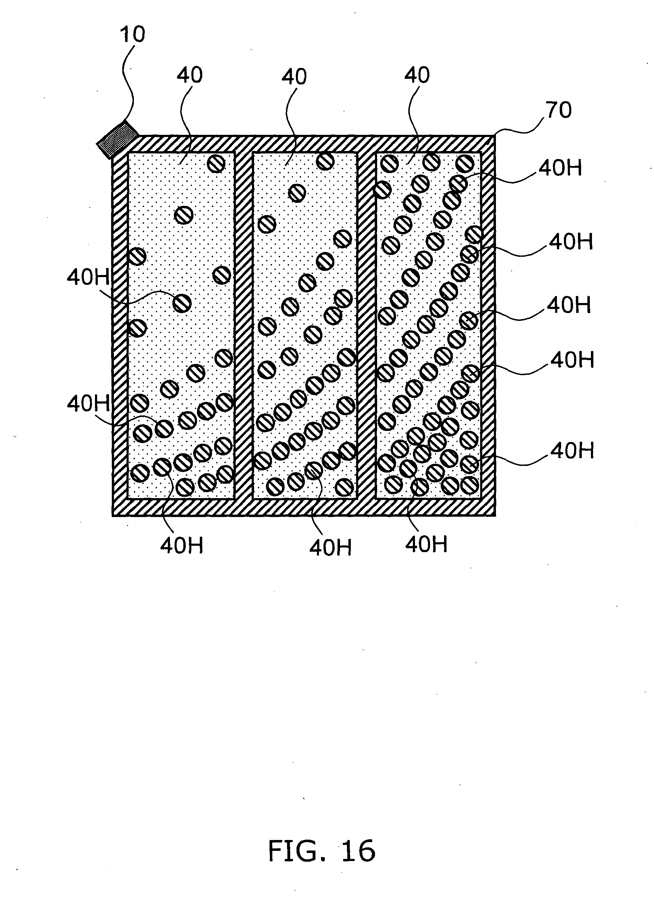

FIG. 16 is a schematic view showing a specific example of the aperture ratio distribution shown in FIG. 15.

Also in this example, the fuel electrode side current collector 40 is provided with many relatively small apertures 40H. The apertures 40H have the same size, and the density thereof is varied. That is, the density of apertures 40H is low near the fuel supply port 10 and is increased with the distance from the fuel supply port 10. Thus the in-plane distribution of the amount of fuel supplied to the power generating section through the apertures 40H can be made close to uniformity.

Instead of varying the density of apertures 40H in this manner, the size of the apertures 40H may be varied as described above with reference to FIG. 11, or the apertures 40H may be formed as a mesh with its density or aperture ratio varied as described above with reference to FIG. 12.

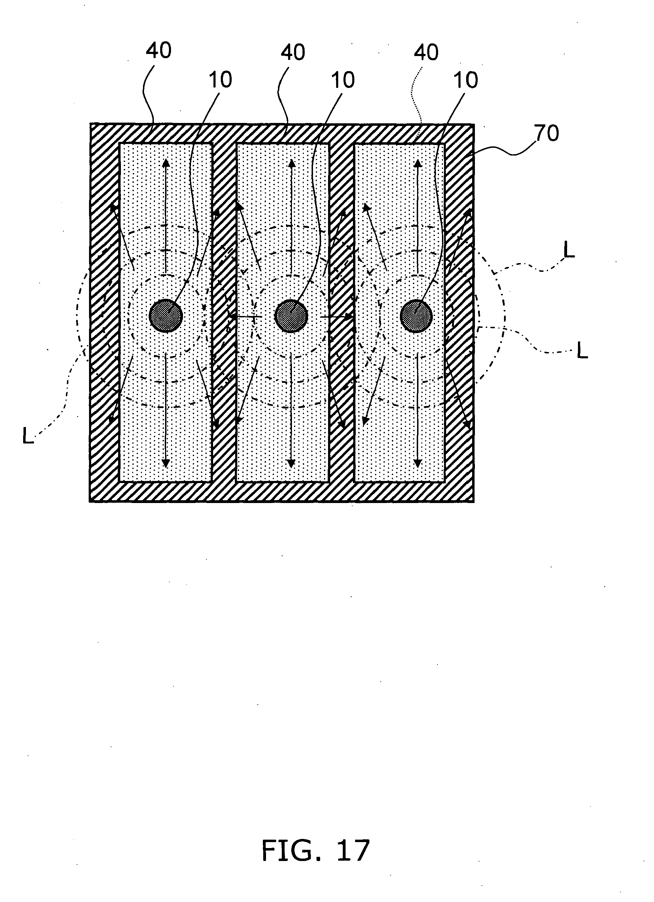

FIG. 17 is a conceptual view showing the distribution of aperture ratio of the fuel electrode side current collector 40 in the case where a plurality of fuel supply ports 10 are provided in the lower face of the casing 140.

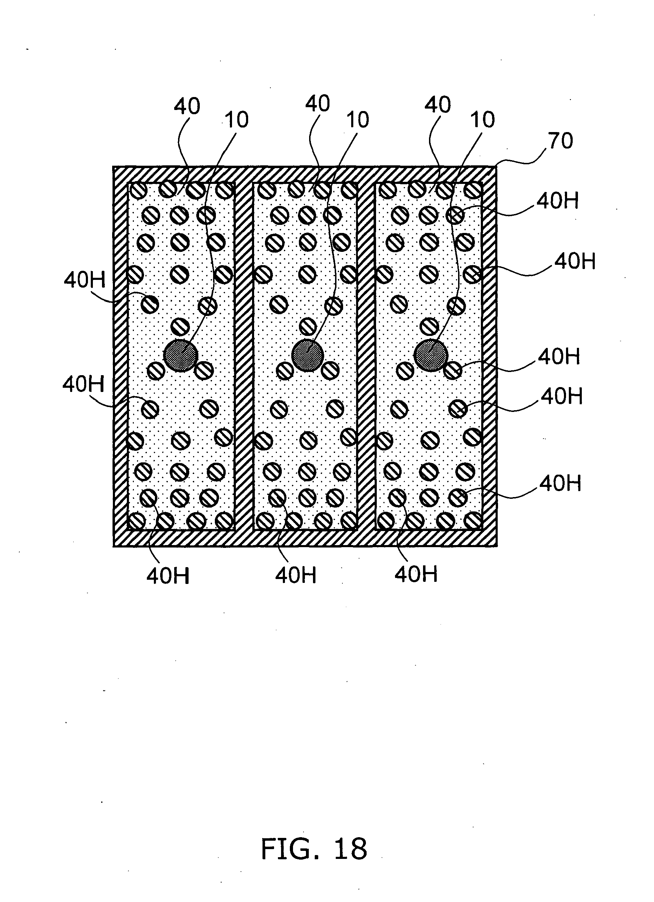

In the case with a plurality of fuel supply ports 10, with respect to each fuel supply port 10, fuel supplied from the other fuel supply ports 10 is added. Hence, in determining the aperture ratio of the fuel electrode side current collector 40 in FIG. 18, such addition effect needs to be taken into consideration. Consequently, the aperture ratio distribution of the fuel electrode side current collector 40 is not an equidistant distribution around each fuel supply port 10, but is deformed depending on the arrangement of the fuel supply ports 10.

FIG. 18 is a schematic view showing a specific example of the aperture ratio distribution shown in FIG. 17.

Also in this example, the fuel electrode side current collector 40 is provided with many relatively small apertures 40H, and the density thereof is varied. That is, the density of apertures 40H is low near the fuel supply port 10 and is increased with the distance from the fuel supply port 10. Furthermore, in the portion where fuel supplied from the adjacent fuel supply port 10 is added, the density of apertures 40H is decreased. Thus the in-plane distribution of the amount of fuel supplied to the power generating section through the apertures 40H can be made close to uniformity.

Instead of varying the density of apertures 40H in this manner, the size of the apertures 40H may be varied as described above with reference to FIG. 11, or the apertures 40H may be formed as a mesh with its density or aperture ratio varied as described above with reference to FIG. 12.

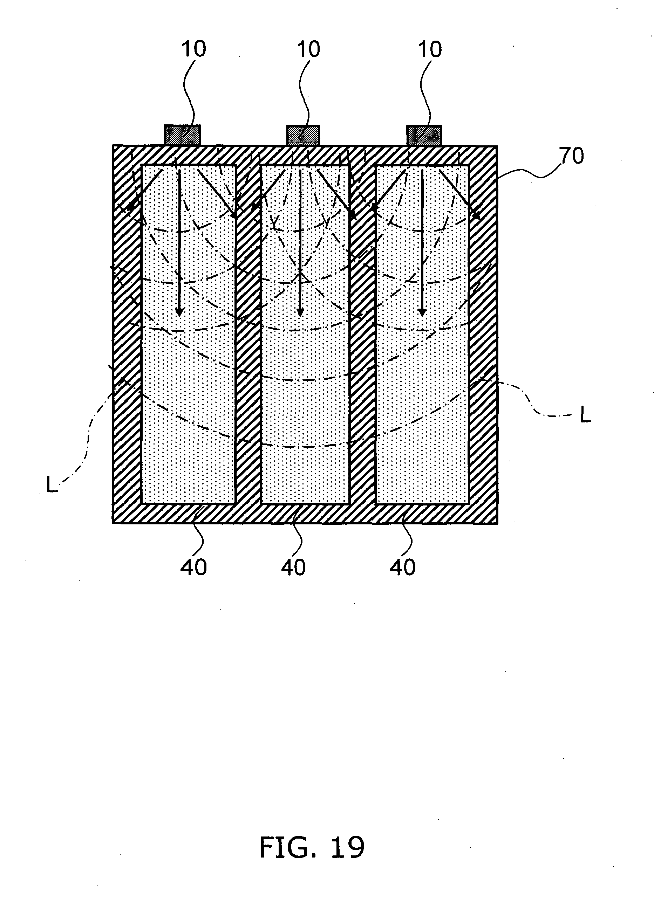

FIG. 19 is a conceptual view showing the distribution of aperture ratio of the fuel electrode side current collector 40 in the case where a plurality of fuel supply ports 10 are provided in the side face of the casing 140.

Also in this case, with respect to each fuel supply port 10, fuel supplied from the other fuel supply ports 10 is added. Hence, in determining the aperture ratio of the fuel electrode side current collector 40, such addition effect needs to be taken into consideration. Consequently, the aperture ratio distribution of the fuel electrode side current collector 40 is not an equidistant distribution around each fuel supply port 10, but is deformed depending on the arrangement of the fuel supply ports 10.

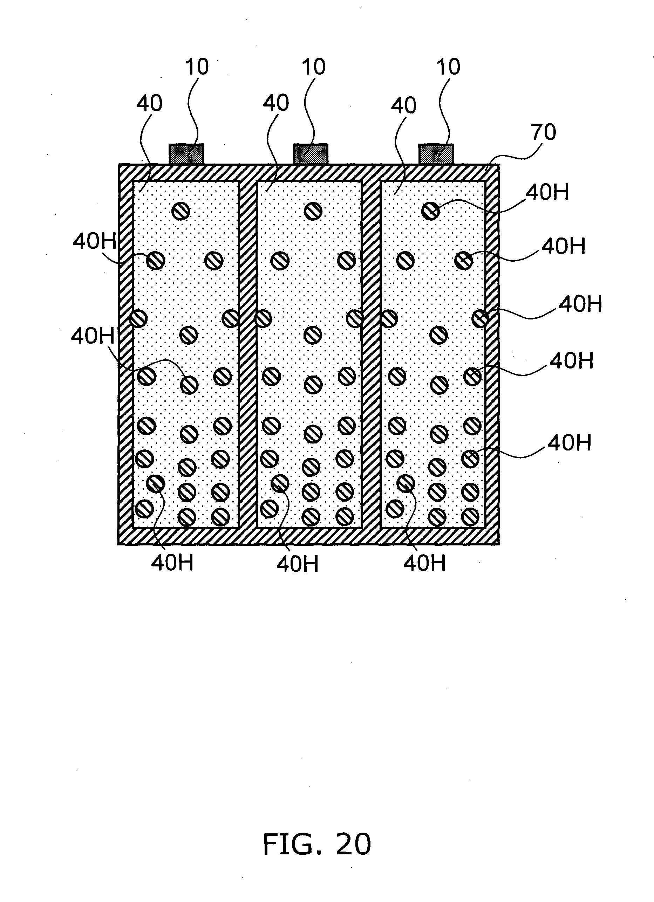

FIG. 20 is a schematic view showing a specific example of the aperture ratio distribution shown in FIG. 19.

Also in this example, the fuel electrode side current collector 40 is provided with many relatively small apertures 40H, and the density thereof is varied. That is, the density of apertures 40H is low near the fuel supply port 10 and is increased with the distance from the fuel supply port 10. Furthermore, in the portion where fuel supplied from the adjacent fuel supply port 10 is added, the density of apertures 40H is decreased. Thus the in-plane distribution of the amount of fuel supplied to the power generating section through the apertures 40H can be made close to uniformity.

Instead of varying the density of apertures 40H in this manner, the size of the apertures 40H may be varied as described above with reference to FIG. 11, or the apertures 40H may be formed as a mesh with its density or aperture ratio varied as described above with reference to FIG. 12.

The embodiment of the invention has been described with reference to examples. However, the invention is not limited to these examples.

For instance, the material, size, shape, and positional relationship of the elements constituting the fuel cell of the invention can be suitably modified by those skilled in the art, and any such modifications are also encompassed within the scope of the invention as long as they include the features of the invention.

The shape, size, number, and distribution of the apertures of the fuel electrode side current collector 40 can also be suitably modified by those skilled in the art, and any such modifications are also encompassed within the scope of the invention as long as they include the features of the invention. Furthermore, the fuel used for the fuel cell is not necessarily limited to liquid, but use of solid fuel, fluid fuel, and critical fluid fuel in the mixed state of gas and liquid phase is also encompassed within the scope of the invention.

Industrial Applicability

According to the invention, an aperture ratio distribution of the fuel electrode side current collector is formed in inverse proportion to the permeability of the liquid retention sheet, and the aperture ratio distribution is radial. Hence it is possible to provide a fuel cell with small variation and high efficiency in power generation, achieving significant industrial advantages.

**Claims**

1. A fuel cell comprising:

   a fuel supply section (2) including a diffusion section (20) configured to diffuse fuel supplied from a fuel supply port (10) in an in-plane direction and an aperture plate (40) having a plurality of apertures (40H) configured to emit the fuel from the diffusion section;
   an oxygen introducing section (6) configured to introduce oxygen from outside; and
   a power generating section (4) configured to generate electric power by the fuel supplied from the fuel supply section and oxygen supplied from the oxygen introducing section,
   aperture ratio of the plurality of apertures provided in the aperture plate having a substantially radial distribution in the in-plane direction such that the aperture ratio is small near the fuel supply port and increases with distance from the fuel supply port.

2. The fuel cell according to claim 1, wherein
   the diffusion section is a sheet body configured to diffuse the fuel by capillarity, and
   the aperture plate is a current collector made of a conductive material.

3. The fuel cell according to claim 1 or 2, wherein each of the plurality of apertures has a substantially identical size.

4. The fuel cell according to claim 1 or 2, wherein size of the plurality of apertures provided in the aperture plate is small near the fuel supply port and large far from the fuel supply port.

5. The fuel cell according to any one of claims 1 to 4, wherein amount of the fuel supplied through the plurality of apertures to the power generating section is substantially uniform in the in-plane direction.

**Amended claims under Art. 19.1 PCT**

1. A fuel cell comprising:

   a fuel supply section (2) including a diffusion section (20) configured to diffuse fuel supplied from a fuel supply port (10) in an in-plane direction and an aperture plate (40) having a plurality of apertures (40H) configured to emit the fuel from the diffusion section;

an oxygen introducing section (6) configured to introduce oxygen from outside; and

a power generating section (4) configured to generate electric power by the fuel supplied from the fuel supply section and oxygen supplied from the oxygen introducing section,

aperture ratio of the plurality of apertures provided in the aperture plate having a substantially radial distribution in the in-plane direction such that the aperture ratio is small near the fuel supply port and increases with distance from the fuel supply port.

**2.** The fuel cell according to claim 1, wherein

the diffusion section is a sheet body configured to diffuse the fuel by capillarity, and

the aperture plate is a current collector made of a conductive material.

**3.** (Amended) The fuel cell according to claim 1, wherein each of the plurality of apertures has a substantially identical size.

**4.** (Amended) The fuel cell according to claim 1, wherein size of the plurality of apertures provided in the aperture plate is small near the fuel supply port and large far from the fuel supply port.

**5.** (Amended) The fuel cell according to claim 1, wherein amount of the fuel supplied through the plurality of apertures to the power generating section is substantially uniform in the in-plane direction.

**6.** (Amended) The fuel cell according to claim 1, wherein a porous membrane is provided between the diffusion section and the aperture plate.

**Statement under Art. 19.1 PCT**

Claims 3 through 5 are corrected so as to depend on only claim 1.

Claim 6 is added.

Claim 6 makes it clear that a porous membrane is provided between a diffusion section and an aperture plate.

The cited document 1 (JP-A 2000-106201(Kokai)) discloses a fuel cell where a fuel infiltrating layer, a fuel vaporizing layer and a power generating section are laminated.

The cited document 2 (JP-A 2003-68325(Kokai)) discloses a fuel cell provided with a hole in a collector on a negative electrode side.

The cited document 3 (JP-A 2004-207067(Kokai)) discloses a fuel cell provided with a cell of a three layers structure having a solid electrolyte, a positive electrode material and a negative electrode material on a disk-shaped porous metal plate, and having a gas fluid channel introducing a fuel gas configured in a curved radial shape from a cell center portion to an outer periphery portion.

The cited document 4 (a microfilm taking a photograph of contents of the description and drawings attached to the request in the Japanese application for utility model registration 2-107191) discloses a fuel cell having a collector where an aperture on an inlet side of anode gas is smaller than an aperture on an outlet side of the anode gas.

According to this invention, providing the porous membrane between the diffusion section and the aperture plate allows the fuel diffused in an in-plane direction in the diffusion section to vaporize smoothly in the porous membrane and makes it possible to supply the vaporized fuel homogeneously to the power generating section via the aperture plate. That is, providing the porous membrane can prevent the fuel in a liquid state from soaking out of the diffusion section to the aperture plate and supply the vaporized fuel to the aperture plate.

FIG. 1

FIG. 2

FIG. 3

FIG. 4

FIG. 5

FIG. 6

FIG. 7

DISTANCE FROM SUPPLY PORT(m)

FUEL CONCENTRATION RATIO DISTRIBUTION
IN LIQUID RETENTION SHEET

FIG. 8

FUEL CONCENTRATION DISTRIBUTION AFTER
PENETRATION THROUGH CURRENT COLLECTOR

FIG. 9

FIG. 10

FIG. 11

FIG. 12

FIG. 13

FIG. 14

FIG. 15

FIG. 16

FIG. 17

FIG. 18

FIG. 19

FIG. 20

| INTERNATIONAL SEARCH REPORT | | International application No. |
|---|---|---|
| | | PCT/JP2006/310582 |

A. CLASSIFICATION OF SUBJECT MATTER
*H01M8/02(2006.01)i, H01M8/10(2006.01)i*

According to International Patent Classification (IPC) or to both national classification and IPC

B. FIELDS SEARCHED

Minimum documentation searched (classification system followed by classification symbols)
H01M8/02, H01M8/10

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-106201 A (Toshiba Corp.), 11 April, 2000 (11.04.00), Full text & US 6447941 B1 | 1-5 |
| Y | JP 2003-68325 A (Sharp Corp.), 07 March, 2003 (07.03.03), Full text (Family: none) | 1-5 |
| Y | JP 2004-207067 A (Nissan Motor Co., Ltd.), 22 July, 2004 (22.07.04), Full text (Family: none) | 1-5 |

| ☒ | Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 September, 2006 (07.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/310582

C (Continuation).    DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 107191/1990(Laid-open No. 63562/1992) (Sanyo Electric Co., Ltd.), 29 May, 1992 (29.05.92), Full text (Family: none) | 1-5 |
| Y | JP 2003-242997 A  (Toshiba Corp.), 29 August, 2003 (29.08.03), Full text (Family: none) | 1-5 |
| A | JP 45-2262 B1  (Japan Storage Battery Co., Ltd.), 30 July, 1970 (30.07.70), Full text (Family: none) | 1-5 |
| A | JP 2003-7311 A  (Mitsubishi Materials Corp.), 10 January, 2003 (10.01.03), Full text (Family: none) | 1-5 |
| A | JP 2005-38738 A  (Mitsubishi Rayon Co., Ltd.), 10 February, 2005 (10.02.05), Full text (Family: none) | 1-5 |
| E,X | JP 2006-196430 A  (Toshiba Corp.), 27 July, 2006 (27.07.06), Full text (Family: none) | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000106201 A

- JP 8124583 A